# EUROPEAN PATENT APPLICATION

(11) **EP 4 164 007 A1**
(43) Date of publication of application: **12.04.2023**
(21) Application number: 22200675.1
(22) Date of filing: 10.10.2022
(51) Int. Cl.: H01M 4/66, H01M 50/124, H01M 50/169, H01M 50/186, H01M 50/191, H01M 50/545, H01M 50/645

(54) **MINIATURE SECONDARY ELECTROCHEMICAL CELL WITH CURRENT COLLECTOR DESIGN TO IMPROVE OPEN CIRCUIT VOLTAGE**

(30) Priority: 08.10.2021 US 202163253588 P; 26.05.2022 US 202263345980 P
(71) Applicant: Greatbatch Ltd., Clarence, New York 14031 (US)
(72) Inventor: VIYANNALAGE, Lasantha, East Amherst, 14051 (US); DIANETTI, David, Lancaster, 14086 (US); ARELLANO, Jared, Akron, 14001 (US); YUN, Ho-Chul, East Amherst, 14051 (US); RUBINO, Robert, Williamsville, 14221 (US)
(74) Representative: Drywood, Rosalind Aerona

(57) **Abstract**

A miniature electrochemical cell of a secondary chemistry having a total volume that is less than 0.5 cc is described. Before the present invention, miniature secondary electrochemical cells have been known to experience undesirable open circuit voltage discharge during their initial 21-day aging period. It is believed that electrolyte permeating through the cathode active material and an intermediate carbonaceous coating contacting the titanium base plate of the casing is the source of the undesirable discharge. To ameliorate this, aluminum is contacted to the inner surface of the base plate inside the casing. While aluminum is resistant to the corrosion reaction that is believed to be the mechanism for degraded open circuit voltage in miniature secondary electrochemical cells containing lithium, it is not biocompatible. This means that titanium is still a preferred material for the casing parts including the base plate that might be exposed to body fluids, and the like.

## Description

### CROSS-REFERENCE TO RELATED APPLICATIONS

This application claims priority to U.S. provisional patent application Ser. Nos. 63/253,588, filed on October 8, 2021, and 63/345,980, filed on May 26, 2022.

### FIELD OF THE INVENTION

The present invention relates to the conversion of chemical energy to electrical energy. More particularly, the present invention relates to an electrochemical cell, and preferably to a miniature electrochemical cell which is defined as having a total size or volume that is less than 0.5 cc. Such so-called miniature electrochemical cells enable numerous new and improved medical device therapies.

### BACKGROUND OF THE INVENTION

U.S. Patent No. 10,957,884 to Dianetti et al., which is assigned to the assignee of the present invention and incorporated herein by reference, describes a miniature electrochemical cell housed in a metallic casing having three main components: a base plate supporting a cylindrically-shaped annular sidewall having an open upper end closed with a cover plate or lid. The base plate, annular sidewall and lid are each of a metal material, for example, titanium, and preferably, commercially pure Grade 2 titanium.

The annular sidewall is selectively coated with a dielectric or ceramic material to provide electrical isolation of the to-be-housed first active material, for example, a cathode active material, from the metallic annular sidewall. A sealing glass is applied to the planar inner surface of the base plate adjacent to the peripheral edge of the base plate. The annular sidewall is supported on this sealing glass. The annular sidewall and base plate are then heated to a temperature that is sufficient to achieve a glass-to-ceramic seal with the dielectric or ceramic material coating the annular sidewall and a glass-to-metal seal with the base plate. The thickness of the sealing glass combined with that of the glass seal bonded at the base plate and at the dielectric or ceramic material coating the annular sidewall is sufficient to ensure electrical isolation between the base plate and the supported annular sidewall.

A first active material, for example, a cathode active material in a secondary electrochemical system, is deposited into the cavity formed by the base plate/annular sidewall subassembly. The cathode active material is in electrical continuity with the base plate, which serves as the positive terminal for the cell, but which is electrically isolated from the annular sidewall by the above-described sealing glass and dielectric or ceramic material. A separator is supported on the exemplary cathode active material.

Separately, a second active material, for example, an anode active material in a secondary electrochemical system, is contacted to an inner surface of the lid. The metallic lid/second active material subassembly is then seated on an inner step of the annular sidewall, and the lid and sidewall are welded together. In this construction, the lid connected to the annular sidewall is in electrical continuity with the anode active material to thereby serve as the negative terminal for the cell.

Finally, the electrode assembly is activated with an electrolyte filled into the casing through a fill port generally centered in the lid. The fill port is then sealed with a closure member welded therein or by melting the material of the lid into a solid mass closing the fill port.

U.S. Pub. No. 2022/0085473 to Arellano et al., which is assigned to the assignee of the present invention and incorporated herein by reference, describes a miniature electrochemical cell that is similar to the cell described by the above-referenced '884 patent to Dianetti et al. However, instead of centering the electrolyte fill port in the lid, the fill port is axially aligned with an annulus residing between the inner surface of the annular sidewall and the electrode assembly. This allows the casing to be filled with electrolyte using a vacuum filling process so that the activating electrolyte readily wets the anode and cathode active materials and the intermediate separator.

U.S. Pub. No. 2022/0166095 to Dianetti et al., which is also assigned to the assignee of the present invention and incorporated herein by reference, describes a miniature electrochemical cell that is similar to the cells described by the above-referenced '884 patent to Dianetti et al. and the '473 publication to Arellano et al. However, instead of the annular sidewall being supported on the sealing glass contacted to the planar inner surface of the base plate adjacent to the peripheral edge of the base plate, the base plate is provided with an annular channel that extends part-way into the thickness of the plate adjacent to its peripheral edge. A sealing glass is provided in the channel and the annular sidewall is supported on this sealing glass. The annular sidewall and base plate are then heated to a temperature that is sufficient to achieve a glass-to-ceramic seal with the dielectric or ceramic material coating the annular sidewall and a glass-to-metal seal with the base plate. Since the glass in the annular channel seals against three surfaces of the annular sidewall, which are the lower edge intermediate the inner and outer sidewall surfaces, the glass seal is robust enough to withstand the heat that is generated when the lid is welded to the upper edge of the annular sidewall. In a similar manner as described in the above-referenced '473 publication to Arellano et al., the lid has a sealed electrolyte fill port that is axially aligned with an annulus residing between the inner surface of the annular sidewall and the electrode assembly.

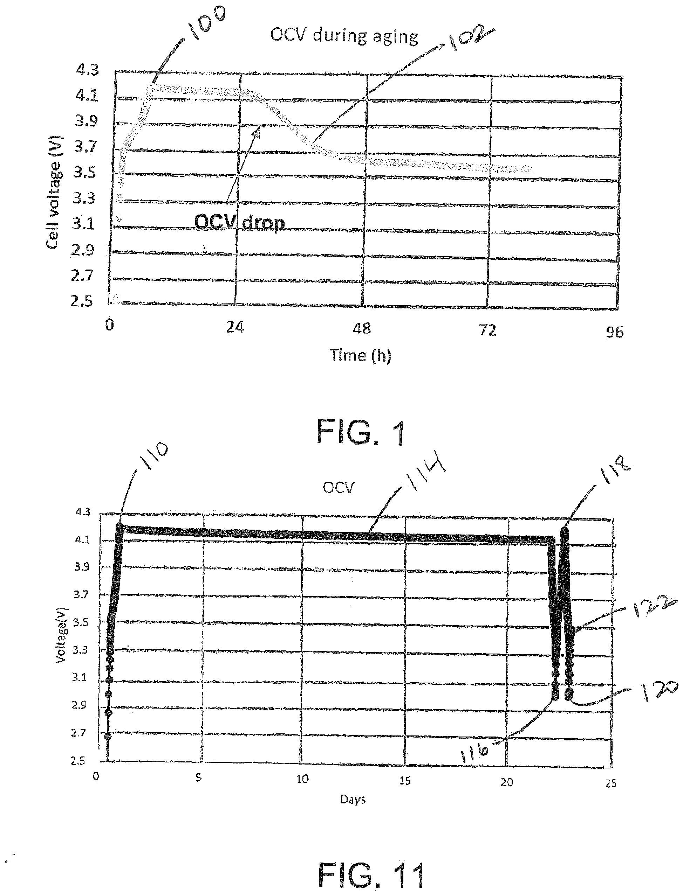

However, a vexing problem in a miniature rechargeable or secondary electrochemical cell having a size or total volume that is less than 0.5 cc is that such cells using titanium, particularly commercially pure Grade 2 titanium, for the base plate, annular sidewall and lid have shown unusually fast open circuit voltage (OCV) drop during a 21-day aging process. This is shown in FIG 1.

An exemplary secondary electrochemical cell according to the present invention is built in a discharged condition with the cathode being a lithiated material. The cathode active materials was lithium nickel manganese cobalt oxide (LiNiₐMn_{b}Co_{1-a-b}O₂) while graphite was the anode material. In the graph of FIG. 1, the point indicated by numerical designation 100 indicates when the newly built exemplary secondary electrochemical cell having a graphite anode and a lithium nickel manganese cobalt oxide cathode was fully charged to 4.2 volts during cell formation. The cell was then allowed to rest for 21 day on open circuit. This is referred to as aging the cell and is shown as the curve portion indicated with numerical designation 102 in FIG. 1. It is apparent that the open circuit voltage dropped an appreciable amount in the 21-day aging period.

Destructive analysis showed that the base plate serving as the cathode current collector exhibited signs of corrosion when the exemplary electrochemical cell was charged to 4.2 V. It is postulated that corrosion of titanium increases the electron density in the cathode which attracts lithium ions from the electrolyte to maintain charge balance. At the same time, titanium ions (corrosion product) are transported to the anode where they are reduced on the anode surface. Lithium ions exiting from the anode give electrons to the titanium ions. This reaction mechanism discharges the cell, which brings the OCV down.

Interestingly, however, corrosion related OCV drop has not been observed in larger (production) implantable rechargeable electrochemical cells of a similar chemistry. It is believed that the magnitude of the corrosion reaction is insignificant in a larger, production cell compared to the cell capacity. In contrast, a miniature electrochemical cell having a size or total volume that is less than 0.5 cc has comparatively much less capacity. Even a minor unwanted reaction such as corrosion of titanium can consume a significant amount of the cell capacity, which negatively impacts OCV and cell performance.

Thus, there is a need for an improved miniature secondary electrochemical cell that exhibits improved open circuit voltage. The present miniature secondary electrochemical cell provides a solution to this problem with the result that the cell has significantly reduced titanium corrosion and, consequently, improved open circuit voltage during the 21-day aging period and thereafter improved discharge efficiency during charge and discharge cycling.

### SUMMARY OF THE INVENTION

Aspects and embodiments of the invention are set out in the appended claims.

In an illustrative miniature secondary electrochemical cell according to the present invention, a dielectric or ceramic material selectively coated to the titanium annular sidewall effectively isolates the sidewall from contact with electrolyte. A carbonaceous coating preferably contacts the lid intermediate the anode active material to effectively isolate the lid from the electrolyte. That leaves the titanium base plate as a place where electrolyte can contact titanium and potentially cause an undesirable corrosion reaction that could degrade the cell's open circuit voltage and thereafter negatively impact discharge efficiency during charge and discharge cycling. The base plate serves as the positive terminal in electrical continuity with the cathode active material through an intermediate carbonaceous coating. However, the cathode active material and the carbonaceous coating are not impervious enough to prevent electrolyte from coming into contact with the base plate. For that reason, an aluminum layer is contacted to the base plate preferably followed by the carbonaceous coating intermediate then cathode active material. Together the carbonaceous and aluminum layers serve as a cathode current collector and as an impervious barrier that prevents electrolyte from contacting the base plate. An exemplary electrolyte comprises LiPF₆ dissolved in a mixture of ethylene carbonate (EC) and ethyl methyl carbonate (EMC).

Thus, according to the present invention, corrosion of the titanium base plate serving as the positive terminal for the cell is prevented by contacting aluminum to the base plate. This aluminum does not prevent the annular sidewall coated with the ceramic or dielectric material from forming a glass-to-metal seal with the base plate nor does it prevent formation of the glass-to-ceramic seal with the dielectric material coating the annular sidewall. Instead, the aluminum prevents corrosion of the titanium base plate, which is believed to be the root cause of diminished open circuit voltage graphically depicted in FIG. 1.

In that respect, the present invention relates to an electrochemical cell, and preferably a miniature secondary electrochemical cell, comprising a casing housing an electrode assembly. A miniature electrochemical cell is defined as a cell having a size or total volume that is less than 0.5 cc. The casing comprises an annular sidewall extending to an upper edge spaced from a lower edge. A dielectric material coats the lower edge and a portion of the inner surface of the annular sidewall. A lid, which is preferably a titanium lid, hermetically closing the upper edge of the annular sidewall has an electrolyte fill port. A ring-shaped sealing glass forms a glass-to-ceramic seal with the dielectric material coating the annular sidewall and a glass-to-metal seal with the base plate. To prevent unwanted corrosion of the base plate, which is preferably a titanium base plate, however, an aluminum layer serving as a cathode current collector is contacted to the inner surface of the base plate, spaced inwardly from the ring-shaped sealing glass.

The electrode assembly housed inside the casing comprises an anode active material in electrical continuity with the lid. A carbonaceous coating preferably contacted to the lid intermediate the anode active material effectively isolates the electrolyte from the lid serving as the negative terminal for the cell. The cathode active materials is in electrical continuity with the aluminum layer contacting the base plate serving as the positive terminal. One preferred cell chemistry is a lithium-ion electrochemical cell preferably comprising a carbonaceous anode and a lithium metal oxide-based cathode, such as of LiCoO₂ or lithium nickel manganese cobalt oxide (LiNiₐMn_{b}Co_{1-a-b}O₂). The electrochemical cell is completed with a liquid electrolyte filled into the casing through the fill port, and the fill port is then hermetically sealed.

Moreover, while the present cell designs are adapted for miniature electrochemical cells, they are also applicable to cells that have a total volume that is greater than 0.5 cc and are not classified as "miniature".

These and other aspects of the present invention will become increasingly more apparent to those skilled in the art by reference to the following detailed description and to the appended drawings.

### BRIEF DESCRIPTION OF THE DRAWINGS

FIG. 1 is a graph constructed from the open circuit voltage discharge of a prior art miniature secondary electrochemical cell.
FIG. 2 is a perspective view of an electrochemical cell 10 according to the present invention.
FIG. 3 is a plan view of the electrochemical cell 10 shown in FIG. 2.
FIG. 4 is a cross-sectional view along line 4-4 of FIG. 3 showing an exemplary secondary electrochemical cell 10 according to the present invention.
FIG. 5 shows a casing first or base subassembly 18 for the electrochemical cell 10 shown in FIGs. 2 to 4 having an aluminum layer 15 brazed to the titanium base plate 12.
FIG. 6 shows a cathode active material 28 and separator 30 supported on the aluminum layer 15 brazed to the base plate 12 shown in FIG. 5
FIG. 7 is a perspective view of the lid subassembly 20 for the electrochemical cell 10 shown in FIGs. 2 and 3 having a lid 16 embossed electrolyte fill port 32.
FIG. 8 is a perspective view of the lid 16 shown in FIGs. 2 to 4 and 7.
FIG. 9 is a plan view of the lid 16 shown in FIGs. 2 to 4, 7 and 8.
FIG. 10 is a cross-sectional view taken along line 10-10 of FIG. 9.
FIG. 11 is a graph constructed from the open circuit voltage discharge of a miniature secondary electrochemical cell according to the present invention having the aluminum layer 15 brazed to the titanium base plate 12 shown in FIG. 5.
FIG. 12 is an elevational view of the base plate 12/annular sidewall 14 subassembly shown in FIG. 5 with an aluminum disc 42 press-fit into a recess 40 in the base plate.
FIG. 13 is an elevational view of the base plate 12/annular sidewall 14 subassembly shown in FIG. 5 with an aluminum disc 42 press-fit into the recess 40 and connected to the base plate with welds 46A, 46B.
FIG. 14 is an elevational view of the base plate 12/annular sidewall 14 subassembly shown in FIG. 5 with the aluminum disc 42 having a post 42D received in a via hole 12J in the base plate.
FIG. 15 is an elevational view of the base plate 12/annular sidewall 14 subassembly shown in FIG. 5 with an aluminum coating 48 contacted to the annular sidewall 40A and lower surface 40B of the recess 40 and to an annular web 121 of the base plate.
FIG. 16 is an elevational view of the base plate 12/annular sidewall 14 subassembly shown in FIG. 5 with the aluminum coating 48 shown in FIG. 15 contacted to the recess 40 and with an insulative material 44 contacted to the annular web 121.

### DETAILED DESCRIPTION OF THE PREFERRED EMBODIMENTS

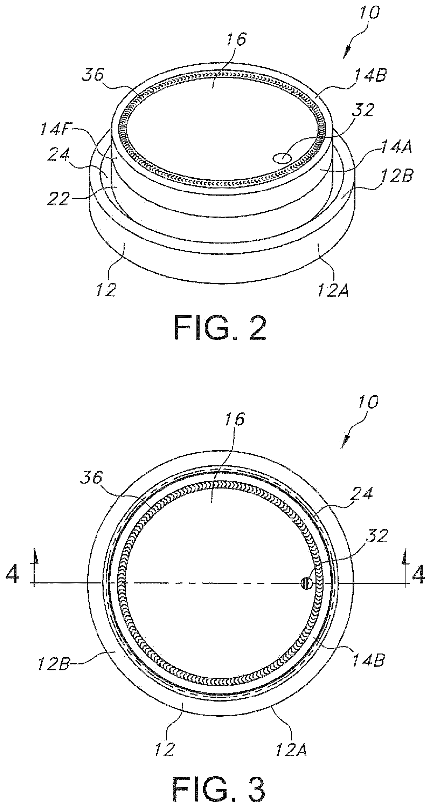

Turning now to the drawings, FIG. 2 illustrates an exemplary miniature secondary electrochemical cell 10 according to the present invention. The miniature secondary electrochemical cell 10 comprises an electrode assembly housed in a hermetically sealed casing. The casing comprises a base plate 12 supporting an annular sidewall 14 having an open end closed by a plate-shaped cover or lid 16. The base plate 12, annular sidewall 14 and lid 16 are each of a biocompatible metal, for example, commercially pure Grade 2 titanium. Grades 1 and 5 titanium are also useful with the present invention with Grade 5 titanium being preferred over Grade 1 titanium. Aluminum exhibits superior corrosion resistance in comparison to both Grade 1 and Grade 5 titanium, however, it is not biocompatible.

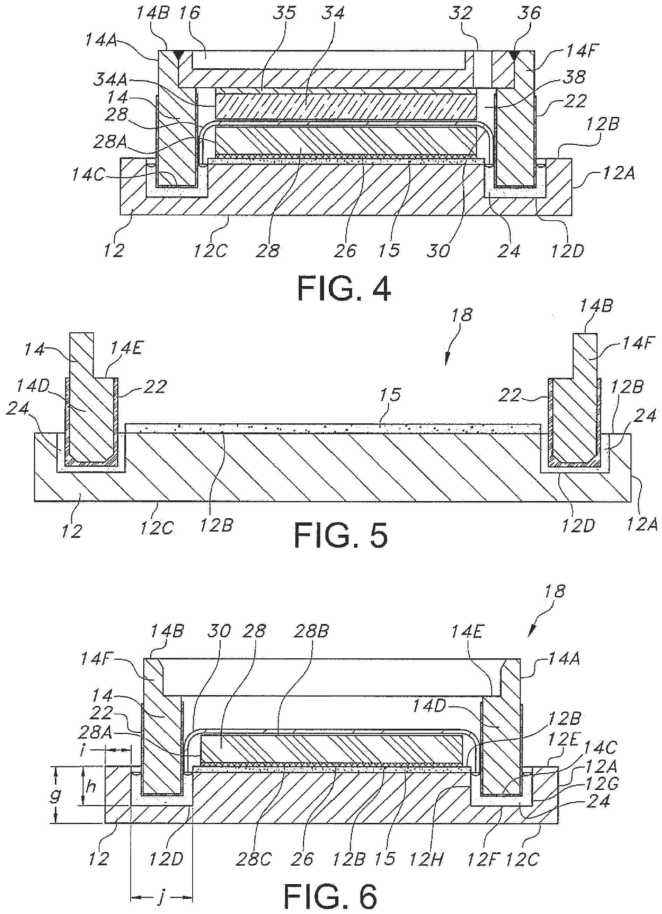

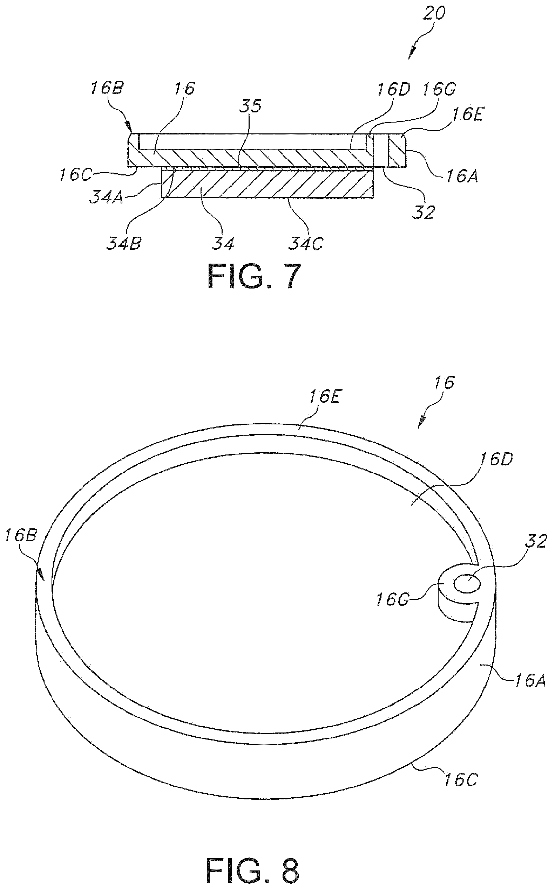

FIGs. 5 and 7 illustrate that the casing for the cell 10 is assembled from a first or base subassembly 18 (FIG. 5) and a second or lid subassembly 20 (FIG. 7). The base subassembly 18 comprises the base plate 12 having an annular peripheral edge 12A extending to and meeting a base plate inner surface 12B spaced from an outer surface 12C. An annular channel 12D extends part-way into the thickness of the plate 12 from the inner surface 12B but the channel ends spaced from the outer surface 12C. The annular channel 12D is spaced inwardly from the peripheral edge 12A.

The thickness of the base plate 12 is defined as the distance "g" (FIG. 6) measured from the inner surface 12B to the outer surface 12C and ranges from about 0.012 inches to about 0.018 inches. The annular channel 12D is spaced radially inwardly from the annular edge 12A to form a channel annular rim 12E having a height "h" measured from the channel lower surface 12F to the inner surface 12B of the base plate 12, and an annular rim width "i" measured from the peripheral edge 12A to a distal surface 12G of the channel 12D. The height "h" of the channel annular rim ranges from about 0.007 inches to about 0.013 inches while the annular rim width "i" ranges from about 0.005 inches to about 0.010 inches.
Finally, the channel 12D has a width "j" measured from a channel proximal surface 12H to the channel distal surface 12G. The channel width "j" ranges from about 0.010 inches to about 0.020 inches.

FIGs. 5 and 6 further show that the annular sidewall 14 comprises a cylindrically shaped outer surface 14A extending to an upper annular edge 14B spaced from a lower annular edge 14C. The upper and lower edges 14B, 14C reside along respective imaginary planes that are substantially parallel to each other. An inner surface of the annular sidewall 14 has a first or lower cylindrically-shaped portion 14D extending upwardly part-way along the height of the sidewall 14 from the lower edge 14C to a step 14E. A second or upper cylindrically-shaped portion 14F extends upwardly from the step 14E to the upper edge 14B.

An annular layer of dielectric material 22, for example, an alumina (Al₂O₃) ceramic material, is coated on the lower edge 14C and the inner surface of the lower cylindrically-shaped portion 14D of the annular sidewall 14. For ease in manufacturing, the dielectric material 22 may also be coated on the outer surface 14A of the sidewall 14. While the dielectric material 22 is shown in FIGs. 2 and 4 to 6 extending along the lower cylindrically-shaped portion 14D of the annular sidewall 14 to adjacent to the step 14E, to function properly it need only extend along the inner portion 14D to a height that is greater than the thickness of the cathode active material that will subsequently nest in the casing base subassembly 18.

FIGs. 2 to 6 further show that the base plate 12 has a diameter at its annular peripheral edge 12A that is significantly greater than the outer diameter of the annular sidewall 14. To hermetically secure the base plate 12 to the annular sidewall 14, an endless ring of sealing glass 24 is nested or positioned in the previously described annular channel 12D. The lower edge 14C of the annular sidewall is then positioned on the upper surface of the glass 24. Depositing the sealing glass 24 in the annular channel 12D is achieved by several suitable methods including screen printing, dispensing, dipping into a frit paste or by use of a preformed endless glass ring. Suitable sealing glasses include both vitreous and crystallizing compositions that exhibit good electrical isolation properties and form mechanical bonds with good wetting characteristics to the metals of the base plate 12 and the annular sidewall 14. Exemplary sealing glasses include, but are not limited to, Ferro IP510, Corning 1890, Schott 8422 and Schott 8629.

The base plate 12, sealing glass 24 and annular sidewall 14 comprising the casing base subassembly 18 are then heated to a temperature that is sufficient to burn off any organic binders that may be present in the glass 24 and flow the glass into intimate contact with the dielectric material 22 contacting the lower annular edge 14C and to have the glass wick part-way up and along the height of the dielectric material coating the inner surface and possibly the outer surface of the lower cylindrically-shaped portion 14D of the sidewall 14. Upon cooling, the glass 24 forms a hermetic glass-to-ceramic seal with the dielectric material coating the annular sidewall 14 and a glass-to-metal seal with the base plate 12. The sealing glass 24 has a thickness that ranges from about 0.002 inches to about 0.0025 inches between where it contacts the dielectric material 22 supported on the annular sidewall 14 and the facing distal surface 12G, lower surface 12F and proximal surface 12H of the annular channel 12D in the base plate 12. This is sufficient to ensure electrical isolation between the base plate 12 and the annular sidewall 14.

As shown in FIG. 5, a relatively thin current collector 15 of an electrically conductive metal or alloy that is substantially impervious to electrolyte is deposited on the inner surface 12B of the base plate 12. The thin metallic current collector 15 is preferably a layer of aluminum that is pressed onto the inner surface 12B of the base plate. Platinum, gold, tantalum and Pt/Ir are also useful materials for the current collector 15. The base plate 12/aluminum current collector 15 assembly is then heated to a temperature that is sufficient to melt the aluminium. Upon cooling to room temperature, a titanium-aluminum braze joint is created at the inner surface 12B of the base plate 12.

As shown in FIG. 6, a conductive carbonaceous coating 26 is deposited on the aluminum current collector 15 brazed to the inner surface 12B of the base plate. This is followed by a first electrode active or for a secondary electrochemical system, a cathode active material 28 being supported on the carbonaceous coating 26. The cathode active material 28 preferably extends to an outer edge 28A that is spaced inwardly from the sealing glass 24 and the annular dielectric coating 22 on the inner surface of the lower cylindrically-shaped portion 14D of the annular sidewall 14. That way, the cathode material 28 is in electrical continuity with the base plate 12 through the conductive carbonaceous coating 26 and the aluminum current collector 15.

The cathode active material 28 is deposited on the carbonaceous coating 26 using any one of many suitable methods (i.e., dispensed, pressed, preformed, sprayed, sputter deposition, evaporation deposition, tape casted, and as a coating). While not intending to limit the present electrochemical cell 10, the cathode active material 28 has a thickness extending to its upper and lower faces 28B, 28C that ranges from about 5 µm to about 1 mm. In other embodiments, the cathode active material 28 has a thickness that is greater than 1 mm. Suitable cathode active materials 28 for secondary electrochemical systems are selected from LiCoO₂, LiNiO₂, LiMnO₂, TiS, FeS, FeS₂, and lithium nickel manganese cobalt oxide (LiNiₐMn_{b}Co_{1-a-b}O₂).

If desired, the cathode active material 28 is mixed with a binder material and a solvent prior to being deposited on the conductive carbonaceous coating 26. Binders such as, but not limited to, a powdered fluoro-polymer, more preferably powdered polytetrafluoroethylene or powdered polyvinylidene fluoride and solvents, such as but not limited to, trimethylphosphate (TMP), dimethylformamide (DMF), dimethylacetamide (DMAc), tetramethylurea (TMU), dimethylsulfoxide (DMSO), or n-methyl-2-pyrrolidone (NMP) may be used.

In addition, up to about 10 weight percent of a conductive diluent may be added to the cathode active material 28 to improve conductivity. Suitable materials for this purpose include acetylene black, carbon black, and graphite or, a metallic powder such as powdered nickel, aluminum, titanium, and stainless steel.

A separator 30 (FIGs. 4 and 6) is placed on top of the cathode active material 28. The separator 30 preferably extends to the dielectric material 22 coating the inner surface of the lower cylindrically-shaped portion 14D of the annular sidewall 14. The separator 30 may also contact the sealing glass 24 supported on the base plate 12 and has a thickness that ranges from about 5 µm to about 30 µm.

Illustrative separator materials include non-woven glass, polypropylene, polyethylene, microporous materials, glass fiber materials, ceramics, the polytetrafluorethylene membrane commercially available under the designations ZITEX (Chemplast Inc.), the polypropylene membrane commercially available under the designation CELGARD (Celanese Plastic Company Inc.) and DEXIGLAS (C. H. Dexter, Div., Dexter Corp.). Other separator materials that are useful with the present invention include woven fabrics comprising halogenated polymeric fibers, as described in U.S. Pat. No. 5,415,959 to Pyszczek et al., which is assigned to the assignee of the present invention and incorporated herein by reference. Examples of halogenated polymeric materials that are suitable for the present invention include, but are not limited to, polyethylene tetrafluoroethylene, which is commercially available under the name Tefzel, a trademark of the DuPont Company, polyethylenechlorotrifluoroethylene which is commercially available under the name Halar, a trademark of the Allied Chemical Company, and polyvinylidene fluoride.

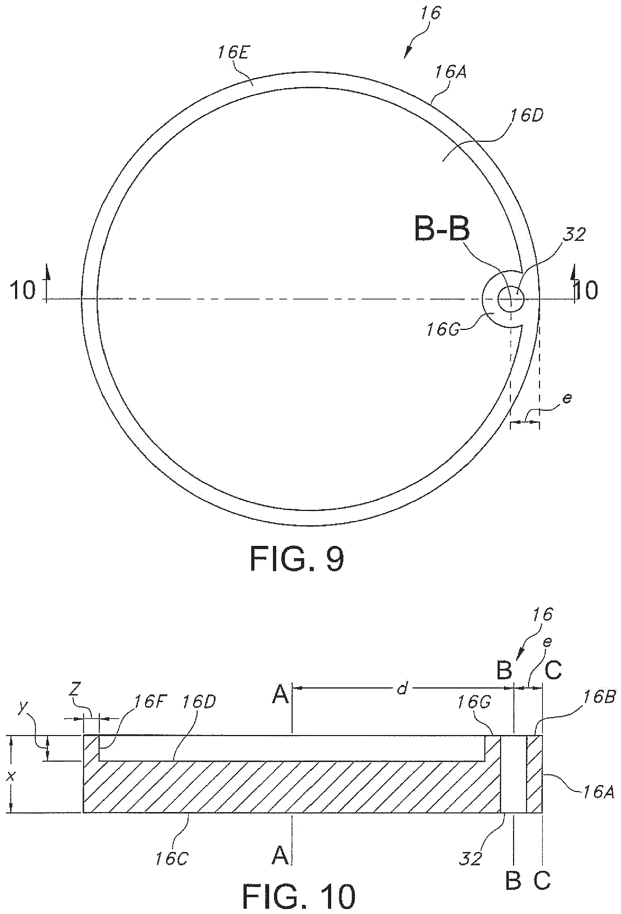

FIGs. 2 to 4 and 7 to 10 illustrate that the casing upper subassembly 20 comprises the upper plate-shaped lid 16 having an annular peripheral edge 16A extending to and meeting a lid outer surface 16B spaced from a lid inner surface 16C. An annular recess 16D extends inwardly from the outer surface 16B part-way through the thickness of the lid 16. As particularly shown in FIG. 10, the lid thickness is defined as the distance "x" measured from the outer surface 16B to the inner surface 16C and ranges from about 0.0055 inches to about 0.025 inches. The annular recess 16D is spaced radially inwardly from the annular edge 16A to form an annular embossed rim 16E having a height "y" measured from the lid outer surface 16B to the recess surface 16D and an annular rim width "z" measured from the peripheral edge 16A to an inner annular surface 16F of the rim 16E. The height "y" of the embossed annular rim 16E ranges from about 0.0005 inches to about 0.010 inches, and the width "z" of the rim ranges from about 0.001 inches to about 0.012 inches.

An electrolyte fill opening or port 32 extends through the thickness of the lid 16 at the embossed annular rim 16E. A sleeve 16G as a portion of the lid surrounds the fill port 32. The sleeve portion 16G is a continuous extension of the embossed annular rim 16E so that the sleeve and rim together define the fill port 32. In that respect, the fill port 32 resides substantially off-center in the lid 16, spaced a relatively short distance inwardly from the annular peripheral edge 16A. As shown in FIG. 10, the lid 16 has a longitudinal axis A-A and the fill port 32 has a longitudinal axis B-B. The distance "d" between the respective axes A-A and B-B ranges from about 0.0185 inches to about 0.30 inches.
Further, the distance "e" from the longitudinal axis B-B of the fill port 32 to the closest tangent line C-C with respect to the annular peripheral edge 16A of the lid 16 ranges from about 0.0015 inches to about 0.035 inches. Thus, the diameter of the lid 16 ranges from about 0.040 inches to about 0.67 inches and is 2x the sum of distances "d" plus "e". The significance of the positioning of the fill port 32 in the lid 16 will be described in greater detail hereinafter. In any event, the fill port 32 provides an open path from the outer surface 16B to the inner surface 16C of the lid 16.

In the secondary electrochemical system shown in FIGs. 4 and 7, a carbonaceous coating 35 is deposited on the lid 16 followed by the anode active material 34. The anode active material 34 is deposited on the carbonaceous coating 35 serving as an anode current collector using any one of many suitable techniques including being pressed into contact with the carbonaceous coating 35, preformed into a sheet that is pressed into contact with the carbonaceous coating 35, sprayed onto the carbonaceous coating 35, sputtered onto the carbonaceous coating 35, or coated on the carbonaceous coating 35. While not intending to limit the present electrochemical cell 10, the anode active material 34 has a thickness extending to its upper and lower faces 34B, 34C that ranges from about 5 µm to about 1 mm. In other embodiments, the anode active material 34 has a thickness that is greater than 1 mm.

Illustrative anode active materials 34 for a secondary electrochemical system include carbon-based materials selected from coke, graphite, acetylene black, carbon black, glass carbon, hairy carbon, and mixtures thereof, or lithiated materials selected from Li₄Ti₅O₁₂, lithiated silver vanadium oxide, lithiated copper silver vanadium oxide, lithiated copper sulfide, lithiated iron sulfide, lithiated iron disulfide, lithiated titanium disulfide, lithiated copper vanadium oxide, LiₓCu_{w}Ag_{y}V₂O_{z} with 0.5 ≤ x ≤ 4.0, 0.01 ≤ w ≤ 1.0, 0.01 ≤ y ≤ 1.0 and 5.01 ≤ z ≤ 6.5, and mixtures thereof.

The lid 16 has a diameter that is sized to fit into the second or upper cylindrically-shaped portion 14F of the annular sidewall 14, supported on the step 14E. In this seated position, the outer planar surface 16B of the lid 16 is substantially co-planar with the upper annular edge 14B of the sidewall 14. As shown in FIGs. 2 to 4, the lid 16 is hermetically secured or sealed to the sidewall 14 with an annular weld 36. In that respect, a benefit attributed to the embossed rim 16E is that it provides material that absorbs heat energy during the laser welding process and that acts as filler material at the weld joint.

An activating electrolyte (not shown) is then filled into the casing through the fill port 32. The fill port 32 is in fluid flow communication with an annular space or annulus 38 provided between the outer annular edges 28A and 34A of the respective active materials 28, 34 and the inner surface of the lower cylindrically-shaped portion 14D (FIG. 4) of the annular sidewall or the dielectric material 22 supported on the cylindrically-shaped portion 14D and allows the casing to be filled with electrolyte using a vacuum filling process.

Without this axial alignment, the electrode assembly would need to be soaked in electrolyte and the remaining casing void volume filled with additional electrolyte prior to welding the lid 16 to the annular sidewall 14. Soaking the electrode assembly in electrolyte creates multiple problems. First, internal voids within the opposite polarity electrode active materials are not optimally filled with electrolyte without a vacuum drawing electrolyte into all available porosity. A second issue relates to the difficulty in welding the lid 16 to the annular sidewall 14 in the presence of electrolyte. Heat generated by welding can cause electrolyte to evaporate and form out-gassing byproducts that can contaminate the weld 36, thereby reducing weld integrity.

Thus, the purpose of the fill port 32 in fluid flow communication with the annular space 38 between the outer annular edges 28A and 34A of the opposed polarity active materials 28 and 34 and the inner surface of the lower cylindrically-shaped portion 14D (FIG. 4) of the annular sidewall 14 or the inner surface of the dielectric material 22 supported on the cylindrically-shaped portion 14D is to provide an open pathway for electrolyte to flow downwardly past the anode active material 34 to wet the lower cathode active material 28 and the intermediate separator 30. This is especially important in the miniature secondary electrochemical cells of the present invention having a size or total volume that is less than 0.5 cc. In such small size cells, the desired volume of electrolyte is sufficient to activate the opposed polarity active materials 28, 34 without there being an overabundance of electrolyte. Without the above-described alignment of the fill port 32 and the internal annular space 38, it is sometimes difficult for the electrolyte to sufficiently wet the electrode assembly 28, 34 to promote acceptable cell discharge.

Further, the distance "e" (FIGs. 9 and 10) from the longitudinal axis B-B of the fill port 30 to the closest tangent line C-C with respect to the annular peripheral edge 16A of the lid ranging from about 0.0015 inches to about 0.035 inches provides sufficient lid material at the fill port 32 to ensure that when the fill port is hermetically welded shut, the lid will not be structurally compromised by the welding process. This helps to ensure long-term hermeticity for the electrochemical cell 10 of the present invention.

The fill port 32 is preferably closed with a closure plug (not shown) that has been press-fit into the opening 32 defined by the sleeve 16G as a continuous extension of the embossed rim 16E. This is followed by welding the closure plug to the embossed rim 16E and sleeve 16G. Alternately, the fill port 32 is closed by directing a laser beam at the embossed rim 16E and sleeve 16G to cause the materials of the rim and sleeve to melt and flow into the port 32, and then cool to hermetically seal the port 32. Suitable closure systems for sealing an electrolyte fill port are described in U.S. Patent Nos. 6,610,443 to Paulot et al., 7,128,765 to Paulot et al. and 10,446,825 to Voss et al. These patents are assigned to the assignee of the present invention and incorporated herein by reference.

The activating electrolyte is a nonaqueous and ionically conductive material mixture serving as a medium for migration of ions between the anode and cathode active materials during conversion of ions in atomic or molecular forms which migrate from the anode active material to the cathode active material. Nonaqueous electrolytes that are suitable for the present electrochemical cell 10 are substantially inert to the anode and cathode active materials, and they exhibit those physical properties necessary for ionic transport, namely, low viscosity, low surface tension and wettability.

A suitable electrolyte has an inorganic, ionically conductive lithium salt dissolved in a mixture of aprotic organic solvents comprising a low viscosity solvent and a high permittivity solvent. The inorganic, ionically conductive lithium salt serves as the vehicle for migration of the anode ions to intercalate or react with the cathode active material 34. Suitable lithium salts include LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄ and LiCF₃SO₃, and mixtures thereof.

Low viscosity solvents useful with the present electrochemical cell 10 include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy, 2-methoxyethane (EME), ethyl methyl carbonate, methyl propyl carbonate, ethyl propyl carbonate, diethyl carbonate, dipropyl carbonate, and mixtures thereof, and high permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methylpyrrolidinone (NMP), and mixtures thereof. An exemplary electrolyte comprises LiPF₆ dissolved in a mixture of ethylene carbonate (EC) and ethyl methyl carbonate (EMC).

For the secondary electrochemical cell 10, the combined thicknesses of the conductive carbonaceous coating 26, the cathode active material 28, the separator 30, and the anode active material 34 is somewhat less than the distance measured from the upper surface 12B of the base plate 12 to the lid inner 16C surface aligned with the step 14E. That way, there is enough free space inside the casing to accommodate expansion and contraction of the electrode stack or anode/cathode electrode assembly as the electrochemical cell 10 of the secondary chemistry is subjected to charge and discharge cycles.

The secondary electrochemical system illustrated in FIG. 4 can have the respective anode and cathode active materials switched with respect to their positions shown in the drawing. In that case, the anode active material is in electrical continuity with the base plate 12 serving as the negative terminal and the cathode active material in electrical continuity with the lid 16 serves as the positive terminal.

With the aluminum current collector 15 brazed to the base plate 12 having a surface area ranging from about 1 mm² to about 1 cm², the outer surface 16B of the lid 16 and the upper edge 14B of the annular sidewall 14 having a combined surface area ranging from about 1 mm² to about 1 cm², and with the height of the casing as measured from the outer surface 12C of the base plate 12 to the upper edge 14B of the annular sidewall 14 ranging from about 250 µm to about 2.5 mm, the electrochemical cell 10 can be built with a total volume that is less than 0.5 cc. As a hermetically sealed "miniature" coin-type enclosure or casing, the secondary electrochemical cell 10 is capable of being implanted in human or animal body tissue for extended periods of time.

As previously discussed in the Prior Art section of this specification, when miniature rechargeable coin-type cells were built using Grade 2 titanium for the casing base subassembly 18 hermetically sealed to the casing upper or lid subassembly 20 (FIG. 7), but without the aluminum current collector 15 (FIG. 5) secured to the base plate 12, the cells exhibited unusually fast open circuit voltage (OCV) drop during a 21-day aging process. As shown in FIG. 1, after little more than 72 hours into the 21-day aging period, a representative secondary electrochemical cell according to the present invention was already exhibiting significant voltage drop, which is believed to have been caused by the previously described corrosion phenonium. While the exact mechanism for the corrosion induced OCV drop is not yet known, it is believed that titanium corrosion increases the electron density in the cathode 28 which attracts lithium ions from the electrolyte to maintain charge balance. At the same time, titanium ions as the corrosion product are transported to the anode 34 and reduce on the anode surface. Lithium ions exit from the anode giving electrons to the titanium ions. The overall reaction discharges the cell, bringing its OCV down.

Interestingly, corrosion related OCV drop has not been observed in larger (production) implantable electrochemical cells of a similar chemistry. It is believed that the magnitude of the corrosion reaction is insignificant in larger production cells compared to cell capacity. In contrast, a miniature electrochemical cell having a total size or volume that is less than 0.5 cc has a relatively small capacity. Even a minor unwanted reaction such as corrosion can consume a significant amount of the cell's capacity which can negatively impact OCV and cycling efficiency.

Accordingly, addition of the aluminum current collector 15 provides sufficient electrical conductivity between the cathode active material 28/carbonaceous layer 26 and the base plate 12 serving as the negative terminal, but physically isolates the titanium base plate from contact with the electrolyte. This effectively eliminates the corrosion mechanism that had previously occurred when the aluminum layer 15 was not present.

FIG. 11 is a graph constructed from the open circuit voltage of an exemplary miniature secondary electrochemical cell according to the present invention containing the aluminum current collector 15 contacted to the base plate 12. The point indicated by numerical designation 110 in the graph of FIG. 11 indicates when the newly built secondary electrochemical cell having a graphite anode and a lithium nickel manganese cobalt oxide cathode was fully charged to 4.2 volts during cell formation. This is similar to the fully charged point 100 indicated in the graph of FIG. 1. The cell was then allowed to rest for 21 days on open circuit. Unlike the discharge curve 102 shown in FIG. 1, the open circuit voltage, indicated by numerical designation 114, was relatively stable through the 21-day aging period. The cell was then connected to a load and discharged to about 3.0 volts (point 116). This was followed by fully charging the cell back to 4.2 volts (point 118), then discharge to point 120 and then charging to about 20% capacity (point 122). Miniature rechargeable coin-type cells 10 according to the present invention are ready for shipment to a customer at this partially recharged capacity. This means that the OCV drop is significantly improved in comparison to that shown in the discharge curve used to construct the graph of FIG. 1. Other than the addition of the aluminum current collector 15, the miniature secondary electrochemical cells used to construct the graphs for FIGs. 1 and 11 were the same.

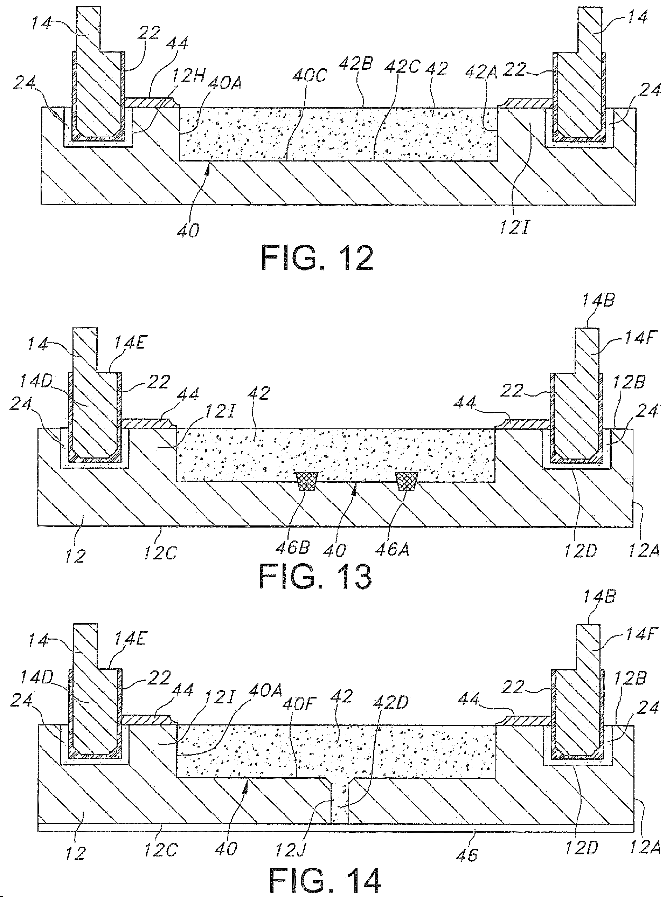

FIGs. 12 to 17 show an alternate embodiment of the base plate 12 having a central recess 40 that extends part-way into the thickness of the plate from the inner surface 12B. The central recess 40, which ends spaced from the outer surface 12C of the base plate and is spaced inwardly from the annular channel 12D, is defined by an annular sidewall 40A that meets a central recess lower surface 40B. The annular sidewall 40A of the central recess 40 is spaced inwardly from the channel proximal surface 12H.

FIG. 12 illustrates an alternate embodiment of the present invention. In this embodiment, a cathode current collector in the form of a disc 42, for example, an aluminum disc, is press-fit in a nested relationship into the central recess 40. The current collector disc 42 comprises a surrounding annular sidewall 42A that extends to and meets opposed disc upper and lower faces 42B and 42C. The disc lower face 42C contacts the central recess lower surface 40C while the opposed disc upper face 42B is exposed to the interior of the casing. The current collector disc 42/base plate 12 assembly is then heated to a sufficient temperature to melt the disc 42 so that the aluminum flows into the recess 40 of the base plate 12. Upon cooling to room temperature, a titanium-aluminum braze joint is created. The previously described cathode active material 28 (not shown in FIG. 12) is then deposited on the exposed upper face 42B so that the disc 42 serves as a cathode current collector for the electrochemical cell 10. In this embodiment, the the base plate 12 is preferably made of biocompatible titanium so that the aluminum disc 42 seving as the cathode current collector is not exposed to body fluids.

The upstranding annular web 121 separating the annular channel 12D of the base plate 12 from the recess 40 is covered with an insulative material 44, such as a layer of aluminum oxide or a polymeric material. The insulative material 44 is chemically resistant and impermeable to the electrolyte (not shown) activating the electrochemical cell 10. Together the aluminum current collector disc 42 and the insulative material 44 prevent electrolyte from contacting the titanium metal comprising the base plate 12.

FIG. 13 illustrates another embodiment of the titanium base plate 12/aluminum current collector disc 42 according to the present invention. Instead of heating the assembly to a temperature that is sufficient to melt the aluminium disc 42 so that it flows into the recess 40 and is brazed to the titanium of the base plate 12, the disc 42 is electrically and mechanically connected to the base plate 12 by at least one, and preferably two resistance welds 46A and 46B. A resistance welding technique can be used to make this connection where one welding electrode (not shown) is contacted to the outer surface 12C of the base plate 12 and an opposed welding electrode is contacted to the aluminum disc 42. A current of a sufficient magnitude is flowed from one electrode to the other to create the resistance welds 46A and 46B, as is well known by those skilled in the art of resistance welding.

While one weld is sufficient to connect the aluminium disc 42 to the base plate 12, it is believed that at least two welds help to distribute more evenly the electrical current generated by the cell 10 across the base plate 12 serving as the positive electrical contact or terminal. In a similar manner as with the embodiment shown in FIG. 12, the upstranding annular web 121 separating the annular channel 12D of the base plate 12 from the recess 40 is covered with an insulative material 44, such as a layer of aluminum oxide or a polymeric material.

FIG. 14 illustrates another embodiment of the titanium base plate 12/aluminum current collector disc 42 assembly according to the present invention. The base plate 12 is provided with a through hole or via hole 12J that extends from the lower surface 40F of the central recess 40 to the outer surface 12C of the base plate 12. Preferably, the through hole 12J is centered with respect to the annular sidewall 40A of the central recess 40. The current collector disc 42 has an outwardly extending post 42D that is preferably centered with respect to the annular sidewall 40A of the recess. That way, with the disc 42 press-fit into the recess 40 in a nested relationship, the post 42D is aligned with and received in the through hole 12J. The post 42D has a length that is about 0.005 inches greater than the distance from the the lower surface 40F of the central recess 40 to the outer surface 12C of the base plate 12 so that the post extends outwardly beyond the outer surface 12C. This allows for a suitable braze-type laser weld (not shown) to electrically and mechanically connect the post 42D to the base plate 12. To optimize wetting of the aluminum post 12J onto the titanium base plate 12, laser light only contacts the post 12J. A biocompatible coating 46 such as titanium or titanium nitride is then applied over the Ti-Al weld joint using vapor deposition or any other suitable technique. In a similar manner as with the embodiments shown in FIGs. 12 and 13, the upstranding annular web 121 separating the annular channel 12D of the base plate 12 from the recess 40 is covered with an insulative material 44, such as a layer of aluminum oxide or a polymeric material.

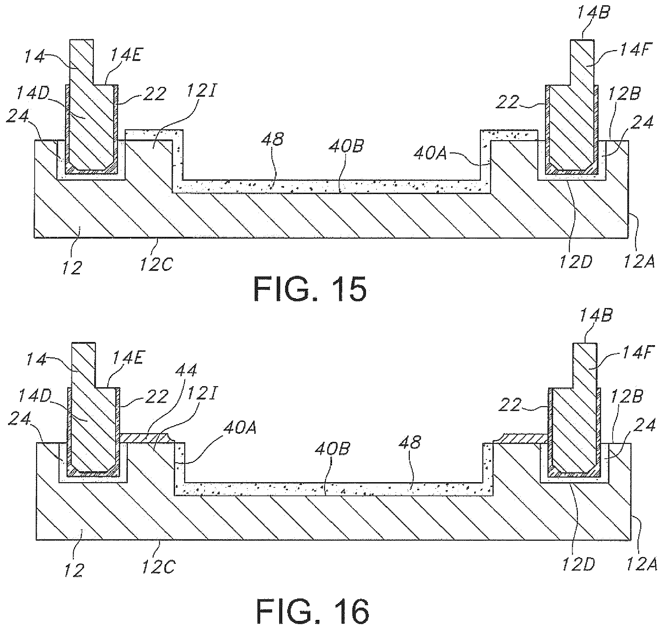

FIG. 15 illustrates another embodiment of the titanium base plate 12/aluminum current collector 15 assembly according to the present invention. The base plate 12/aluminum current collector 15 assembly is similar to the assembly shown in FIGs. 12 to 14, however, instead of an aluminum current collector disc that is press-fit into a nested relationship in the central recess 40, a relatively thin layer of aluminum 48 is deposited in the recess including its annular sidewall 40A and lower surface 40B. The thin aluminum layer 48 is also deposited on the upper surface of the upstranding annular web 121. The thin aluminum layer 48 extends to the sealing glass 24. That way, when the electrochemical cell 10 is activated with an electrolyte, the thin aluminum layer 48 prevents electrolyte from contacting the titanium base plate 12. While sputtering is a suitable technique for depositing the relatively thin aluminum current collector 48, any other deposition technique that bonds aluminum to titanium is contemplated by the scope of the present invention. Depending on the deposition technique used, the thickness of the aluminum current collector 48 preferably ranges from about 0.05 microns to about 100 microns.

FIG. 16 shows an alternate embodiment of the base plate 12 according to the present invention as a hybrid of the embodiments illustrated in FIGs. 12 to 14 and 15. This drawings shows a relatively thin layer of aluminum 48 that is deposited in the recess including its annular sidewall 40A and lower surface 40B. However, unlike the embodiment shown in FIG. 15, the aluminum current collector 48 is not deposited on the upper surface of the annular web 121. In this embodiment, the upper surface of the annular web 121 is devoid of aluminum. Instead, in a similar manner as shown in the embodiments illustrated in FIGs. 12 to 14, an insulative material 44, such as a layer of aluminum oxide or a polymeric material, contacts the titanium annular web 121. The insulative material 44 is chemically resistant and impermeable to the electrolyte (not shown) activating the electrochemical cell. Together, the relatively thin aluminum current collector layer 48 and the insulative material 44 prevent electrolyte from contacting the titanium metal comprising the base plate 12.

Further, a method for providing a secondary electrochemical cell 10 according to the present invention comprises first providing a casing. That is done by providing a base plate 12 and an annular sidewall 14, which, due to its biocompatibility, are preferably made of commercially pure Grade 2 titanium. The base plate 12 has an annular channel that extends part-way into the thickness of the base plate and that is spaced inwardly from an annular peripheral edge 12A thereof. The annular sidewall 14 extends to an upper edge 14B spaced from a lower edge 14C and has an outer annular surface 14A spaced from an inner surface. The inner surface is provided with a step 14E. A dielectric material 22 is coated on the lower edge 14C and at least a portion of the inner surface of the annular sidewall 14.

Next, a ring-shaped sealing glass 24 is nested in the annular channel 12D of the base plate 12 and the annular sidewall 14 is seated on the glass. This subassembly is heated to form a glass-to-metal seal with the base plate 12 and a glass-to-ceramic seal with the dielectric material 22 at the lower edge 14C of the annular sidewall 14. If desired, the dielectric material 22 can only coat the lower cylindrically-shaped portion 14D of the annular sidewall. That way, the sealing glass 24 seals directly to the base plate 12 and the annular sidewall 14.

To segregate the titanium base plate 12 from contact with electrolyte, a thin layer 15/42/48 of aluminum is coated on the inner surface of the base plate. This is followed by a thin layer of carbonaceous material layer 26 being coated on the aluminum layer 15/42/48. The carbonaceous layer and the aluminum layer together serving as a cathode current collector can extend across the entire inner surface of the base plate 12 to the sealing glass 24 or, in an alternate embodiment, the base plate is provided with a central recess 40 and the carbonaceous material layer 26 and aluminum layer 15/42/48 are contacted to the annular sidewall and the inner surface of the base plate recess. This forms an annular web 121 between the central recess 40 and the annular channel 12D supporting the sealing glass 24 and the annular sidewall 14. If the carbonaceous material layer 26 and aluminum layer 15/42/48 does not cover the annular web 121, an insulating material, such as a layer of aluminum oxide or a polymeric material, contacts the web.

Separately, a lid 16, preferably of commercially pure Grade 2 titanium, is provided. The lid 16 has an electrolyte fill port 32 extending through its thickness from a lid outer surface 16B to a spaced apart inner 16C surface. The lid 16 also has a recess 16D extending inwardly from the lid outer surface into its thickness.

An electrode assembly is then provided. The electrode assembly comprises a cathode active material 28 and an anode active material 34. The anode active material 34 is in electrical continuity with the lid 16 serving as the negative terminal for the cell. The cathode active material 28 is in electrical continuity with the base plate 12 through the carbonaceous layer 26 supported on the aluminum current collector 15/42/48 with the base plate serving as the positive terminal. A separator 30 segregates the cathode active material 28 from directed physical contact with the anode active material 34.

The electrochemical cell is completed when the lid 16, preferably of titanium, is seated on the step 14E of the annular sidewall 14 and welded 36 to the upper annular edge 14B thereof. Importantly, the lid 16 is provided with an embossed rim 16E extending between its outer peripheral edge 16A and the recess 16D. When the lid 16 is welded to the annular sidewall 14, the rim 16E provides sufficient material to both absorb heat created at the weld and to provide material that flows into the gap between the lid 16 and the sidewall 14 to provide a hermetic seal between these casing members. The heat absorbed by the rim 16E helps to prevent structural compromise of the glass-to-metal and glass-to-ceramic seals between the annular sidewall 14 and the base plate 12.

This is followed by filling an activating electrolyte into the casing through the electrolyte fill port 32 in the lid 16 and then closing the fill port. An exemplary electrolyte comprises LiPF₆ dissolved in a mixture of ethylene carbonate (EC) and ethyl methyl carbonate (EMC). Also, an annulus 38 resides between the inner surface of the annular sidewall 14 and the electrode assembly. The electrolyte fill port 32 is axially aligned with this annulus 38. That way, electrolyte filled into the casing through the fill port 32 readily wets the electrode assembly to thereby promote extended cell discharge.

It is appreciated that various modifications to the inventive concepts described herein may be apparent to those of ordinary skill in the art without departing from the spirit and scope of the present invention as defined by the appended claims.

## Claims

1. An electrochemical cell, comprising:
a) a casing, comprising:
i) an annular sidewall extending to an upper edge spaced from a lower edge, the annular sidewall having an outer surface spaced from an inner surface;
ii) a dielectric material coating the lower edge and at least a portion of the inner surface of the annular sidewall;
iii) a lid closing the upper edge of the annular sidewall, wherein the lid has a hermetically sealed electrolyte fill port and the fill port extends through a lid thickness from a lid upper surface to a spaced apart lid inner surface;
iv) a base plate having an inner surface spaced from an outer surface;
v) a ring-shaped sealing glass in a glass-to-metal seal relationship with the base plate and in a glass-to-ceramic seal relationship with the dielectric material coating the lower edge of the annular sidewall; and
vi) an aluminum layer contacted to the inner surface of the base plate spaced inwardly from the ring-shaped sealing glass; and
b) an electrode assembly housed inside the casing, the electrode assembly comprising:
i) an anode active material in electrical continuity with the lid serving as a negative terminal for the cell;
ii) a cathode active material in electrical continuity with the aluminum layer contacting the base plate serving as a positive terminal for the cell; and
iii) a separator segregating the anode active material from directed physical contact with the cathode active material; and
c) an electrolyte housed in the casing in contact with the electrode assembly.

2. The electrochemical cell of claim 1, wherein a carbonaceous coating is between and in contact with the cathode active material and the aluminum layer.

3. The electrochemical cell of claim 1 or claim 2, wherein the base plate has an annular peripheral edge and a base plate thickness extending from the inner surface to the base plate outer surface, and wherein the base plate has an annular channel that is spaced inwardly from the peripheral edge, the annular channel extending part-way into the thickness of the base plate from the inner surface, and wherein the sealing glass resides in the annular channel of the base plate to form the glass-to-metal seal with the base plate and the glass-to-ceramic seal with the dielectric material at the lower edge of the annular sidewall.

4. The electrochemical cell of any of claims 1 to 3, wherein the sealing glass forms the glass-to-ceramic seal with the dielectric material at the lower edge and at the inner and outer surfaces of the annular sidewall.

5. The electrochemical cell of any of claims 1 to 4, wherein:
an annulus resides between the inner surface of the annular sidewall and the electrode assembly, and the electrolyte fill port is axially aligned with the annulus; and/or
the electrolyte fill port is either welded closed or provided with a closure plug that is welded to the lid to hermetically seal the fill port.

6. The electrochemical cell of any of claims 1 to 5, wherein:
the inner surface of the annular sidewall is provided with a step, and wherein the lid is seated on the step; and/or
an upper surface of the lid is substantially co-planar with the upper edge of the annular sidewall.

7. The electrochemical cell of any of claims 1 to 6, wherein a lid recess extends inwardly from the lid upper surface part-way into the thickness of the lid to thereby provide an annular rim extending between the lid outer surface and the lid recess, and wherein the lid is welded to the annular sidewall with the annular rim at least partially filled into a gap between the lid and the annular sidewall.

8. The electrochemical cell of any of claims 1 to 7, wherein:
the dielectric material is an alumina (Al₂O₃); and/or
the anode active material is selected from coke, graphite, acetylene black, carbon black, glass carbon, hairy carbon, Li₄Ti₅O₁₂, lithiated silver vanadium oxide, lithiated copper silver vanadium oxide, lithiated copper sulfide, lithiated iron sulfide, lithiated iron disulfide, lithiated titanium disulfide, lithiated copper vanadium oxide, LiₓCu_{w}Ag_{y}V₂O_{z} with 0.5 ≤ x ≤ 4.0, 0.01 ≤ w ≤ 1.0, 0.01 ≤ y ≤ 1.0 and 5.01 ≤ z v 6.5, lithium, and mixtures thereof, and wherein the cathode active material is selected from lithium nickel manganese cobalt oxide (LiNiₐMn_{b}Co_{1-a-b}O₂), LiCoO₂, LiNiO₂, LiMnO₂, TiS, FeS, FeS₂, CFₓ, Ag₂O, Ag₂O₂, Ag₂CrO₄, silver vanadium oxide (SVO), copper silver vanadium oxide (CSVO), V₂O₅, MnO₂, and mixtures thereof.

9. The electrochemical cell of any of claims 1 to 8 having a total volume that is less than 0.5 cc.

10. An electrochemical cell, comprising:
a) a casing, comprising:
i) an annular sidewall extending to an upper edge spaced from a lower edge, and an outer annular surface spaced from an inner surface, wherein the inner surface of the annular sidewall is provided with a step;
ii) a lid seated on the step to close the upper edge of the annular sidewall, wherein the lid has a hermetically sealed electrolyte fill port and the fill port extends through a lid thickness from a lid upper surface to a spaced apart lid inner surface;
iii) a base plate having an inner surface spaced from an outer surface;
iv) an alumina coating the lower edge and at least a portion of the inner surface of the annular sidewall;
v) a ring-shaped sealing glass providing a glass-to-metal seal with the base plate and a glass-to-ceramic seal with the alumina at the lower annular edge of the annular sidewall; and
vi) a metallic layer contacted to the inner surface of the base plate spaced inwardly from the ring-shaped sealing glass, wherein the metallic layer is selected from aluminum, platinum, gold, tantalum and Pt/Ir; and
b) an electrode assembly housed inside the casing, the electrode assembly comprising:
i) an anode active material in electrical continuity with the lid serving as a negative terminal for the cell;
ii) a cathode active material in electrical continuity with the base plate serving as the positive terminal for the cell; and
iii) a separator segregating the anode active material from directed physical contact with the cathode active material; and
c) an electrolyte housed in the casing in contact with the electrode assembly.

11. The electrochemical cell of claim 10, wherein a carbonaceous coating is between and in contact with the cathode active material and the metallic layer.

12. The electrochemical cell of claim 10 or claim 11, wherein the base plate has an annular peripheral edge and a base plate thickness extending from an inner surface to an outer surface, and wherein the base plate has an annular channel that is spaced inwardly from the peripheral edge, the annular channel extending part-way into the thickness of the base plate from the inner surface, and wherein the sealing glass resides in the annular channel of the base plate to form the glass-to-metal seal with the base plate and the glass-to-ceramic seal with the alumina at the lower edge and at the inner and outer surfaces of the annular sidewall.

13. The electrochemical cell of any of claims 10 to 12, wherein an annulus resides between the inner surface of the annular sidewall and the electrode assembly, and the electrolyte fill port is axially aligned with the annulus.

14. The electrochemical cell of any of claims 10 to 13, wherein a lid recess extends inwardly from the lid upper surface part-way into the thickness of the lid to thereby provide an annular rim extending between the outer peripheral edge of the lid and the lid recess, and wherein the lid is welded to the annular sidewall with the annular rim at least partially filled into a gap between the lid and the annular sidewall.

15. A method for providing an electrochemical cell, the method comprising the steps of:
a) providing a casing, comprising:
i) providing an annular sidewall extending to an upper edge spaced from a lower edge, and an outer surface spaced from an inner surface, wherein the inner surface of the annular sidewall is provided with a step;
ii) coating a dielectric material on the lower edge and at least a portion of the inner surface of the annular sidewall;
iii) providing a base plate having an inner surface spaced from an outer surface;
iv) positioning a ring-shaped sealing glass on the inner surface of the base plate;
v) positioning the annular sidewall on the sealing glass opposite the base plate so that the dielectric material coating the lower edge of the annular sidewall contacts the sealing glass;
vi) heating the base plate and the annular sidewall to form a glass-to-metal seal with the base plate and a glass-to-ceramic seal with the dielectric material at the lower edge of the annular sidewall;
vii) providing a lid having an electrolyte fill port extending through a lid thickness defined by a peripheral edge extending to a lid outer surface spaced from a lid inner surface; and
viii) contacting an aluminum layer to the inner surface of the base plate;
b) providing an electrode assembly, comprising:
i) providing an anode active material and contacting the anode active material to the lid serving as a negative terminal for the cell;
ii) providing a cathode active material and contacting the cathode active material to the aluminum layer contacting the inner surface of the base plate base plate serving as a positive terminal for the cell; and
iii) positioning a separator segregating the anode active material from directed physical contact with the cathode active material;
c) seating the lid on the step of the annular sidewall; and
d) welding the lid to the upper edge of the annular sidewall; and
e) filling an activating electrolyte into the casing through the electrolyte fill port in the lid and then closing the fill port,
the method preferably further including providing a carbonaceous coating between and in contact with the cathode active material and the aluminum layer.

16. The method of claim 15, further including providing:
a) the base plate having an annular peripheral edge and a base plate thickness extending from an inner surface to a base plate outer surface, and the base plate having an annular channel that is spaced inwardly from the annular peripheral edge, the annular channel extending part-way into the thickness of the base plate from the base plate inner surface;
b) positioning the sealing glass in the annular channel of the base plate;
c) positioning the annular sidewall on the sealing glass in the annular channel of the base plate; and
d) heating the base plate and the annular sidewall to form the glass-to-ceramic seal with the dielectric material at the lower edge of the annular sidewall and to form the glass-to-metal seal with the base plate; and
e) further providing a lid recess extending inwardly from the lid outer surface into the thickness of the lid to thereby form a lid annular rim extending between the peripheral edge of the lid and the lid recess; and
f) welding the lid to the upper edge of the annular sidewall with the lid annular rim at least partially filling into a gap between the lid and the annular sidewall,
g) wherein an annulus resides between the inner surface of the annular sidewall and the electrode assembly, and the electrolyte fill port is axially aligned with the annulus.
